# EUROPÄISCHE PATENTSCHRIFT

(11) **EP 3 371 423 B1**
(45) Veröffentlichungstag und Bekanntmachung des Hinweises auf die Patenterteilung: **22.03.2023**
(21) Anmeldenummer: 16791571.9
(22) Anmeldetag: 03.11.2016
(51) Int. Cl.: F01M 1/02, F16H 57/04, F01M 1/12

(54) **FÖRDEREINRICHTUNG ZUR FÖRDERUNG VON ÖL**
CONVEYING DEVICE FOR CONVEYING OIL
DISPOSITIF DE REFOULEMENT POUR LE REFOULEMENT D'HUILE

(30) Priorität: 06.11.2015 DE 102015221891
(43) Veröffentlichungstag der Anmeldung: 12.09.2018
(73) Patentinhaber: Vitesco Technologies GmbH, 93055 Regensburg (DE)
(72) Erfinder: BÖHM, Christian, 60316 Frankfurt am Main (DE)
(74) Vertreter: Vitesco Technologies
(86) Internationale Anmeldenummer: PCT/EP2016/076563
(87) Internationale Veröffentlichungsnummer: WO 2017/076975

(56) Entgegenhaltungen:
- WO-A1-2013/053854
- WO-A1-2015/046560
- WO-A1-2015/046578
- WO-A2-2011/095148
- DE-A1- 3 002 391
- DE-A1- 10 326 887
- DE-A1-102006 030 041
- DE-A1-102013 213 051
- JP-A- H02 153 281
- JP-A- 2000 045 955
- JP-U- H02 114 705
- US-A- 4 703 726
- US-A1- 2002 139 345

## Beschreibung

Die Erfindung betrifft eine Fördereinrichtung zur Förderung von Öl aus einem Ölsumpf zu einem Schmierölkreislauf einer Brennkraftmaschine oder eines Getriebes eines Kraftfahrzeuges mit einer Ölpumpe, mit einem mechanischen Direktantrieb und mit einem zuschaltbaren Elektroantrieb zum Antrieb der Ölpumpe.

Eine Fördereinrichtung mit einem zuschaltbaren Elektroantrieb ist beispielsweise aus der DE 10 2011 084 542 A1 bekannt. Der Direktantrieb erzeugt in Abhängigkeit von der Drehzahl der Brennkraftmaschine ein Fördervolumen bei einem Förderdruck. Bei einem erhöhten Bedarf lässt sich die Leistung der Ölpumpe durch Zuschaltung des Elektroantriebs erhöhen.

Die JP H02 153281 A offenbart eine Pumpe mit zwei parallelen Pumpenstufen. Eine der Pumpenstufen wird ständig angetrieben, während die andere der Pumpenstufen zuschaltbar ist. Die Pumpenstufen fördern zu einem gemeinsamen Ausgangsanschluss.

Die WO 2015/046560 A1 offenbart eine hydraulische Fördereinrichtung mit einer elektrischen Ölpumpe und einer mechanischen Ölpumpe. Die elektrische Ölpumpe lässt sich zu der mechanischen Ölpumpe für einen Parallelbetrieb zuschalten. Rückschlagventile sind vor einer Zusammenführung der Ausgänge der Ölpumpen zu einem gemeinsamen Kanal angeordnet.

Die WO 2015/046578 A1 offenbart eine hydraulische Fördereinrichtung mit einer elektrischen Ölpumpe und einer mechanischen Ölpumpe. Zwischen den Ölpumpen ist ein Ventil angeordnet. Rückschlagventile sind vor einer Zusammenführung der Ausgänge der Ölpumpen zu einem gemeinsamen Kanal angeordnet. Die US 2002/139345 A1 offenbart eine Ölpumpe mit einer Hauptpumpe und einer elektrischen Hilfspumpe. Die beiden Pumpen sind parallel geschaltet und fördern Öl in einen gemeinsamen Kanal.

Die JP H2 114705 U offenbart zwei parallele Pumpen, von denen eine mittels eines Elektromotors antreibbar ist. Die Förderleistungen der Pumpen addieren sich.

Die US 4 703 726 A offenbart einen Schmierölkreislauf mit einer Ölpumpe. Die Ölpumpe hat zwei auf einem gemeinsamen Schaft angeordnete Rotoren. Einer der Rotoren fördert Öl aus einem Reservoir zu einem Kühler. Der andere Rotor fördert das von dem Kühler zurückgeführte Öl und weiteres Öl aus dem Reservoir zu verschiedenen Verbrauchern. Eine Aufteilung von Fördervolumen oder Förderdruck auf die einzelnen Verbraucher findet innerhalb der Ölpumpe nicht statt.

Die DE 103 26 887 A1 offenbart ein mehrstufiges Ölpumpensystem mit zwei axial nebeneinander angeordneten Ölpumpen. Die Ölpumpen können unabhängig voneinander betrieben werden.

Die WO 2011/095148 A2 offenbart eine Tandempumpe für ein Kraftfahrzeug, bei der eine Elektromotorwelle eines Elektromotors zum Antrieb einer ersten Pumpe ausgebildet ist. Eine zweite Pumpe kann mit Hilfe einer Kupplung zusammen mit der ersten Pumpe durch die Elektromotorwelle des Elektromotors angetrieben werden.

Bei heutigen Kraftfahrzeugen besteht jedoch insbesondere bei Doppelkupplungsgetrieben das Problem, dass ein relativ hoher Öldruck zum Betätigen und Halten der Kupplung notwendig ist und ein relativ niedriger Druck bei einem hohen Fördervolumen zum Kühlen der Kupplung erforderlich ist. Zudem besteht der Bedarf an Öl zur Kühlung der Kupplung nicht im Verhältnis zu der Drehzahl der Brennkraftmaschine. Daher führt eine Auslegung der Ölpumpe auf den maximal benötigten Förderdruck und das maximal benötigte Fördervolumen zu einer starken Überdimensionierung.

Der Erfindung liegt das Problem zugrunde, eine Fördereinrichtung der eingangs genannten Art so weiter zu bilden, dass sie die Erzeugung zweier unterschiedlicher Förderdrücke bei vorgesehenen Fördervolumina ermöglicht und einfach aufgebaut ist.

Dieses Problem wird erfindungsgemäß dadurch gelöst, dass die Ölpumpe eine erste Druckstufe und eine zweite Druckstufe hat, dass die Druckstufen unterschiedliche Förderdrücke und Fördervolumen aufweisen und dass die beiden Druckstufen einen gemeinsamen Ansauganschluss und getrennte Ausgangsanschlüsse zur Förderung von Öl von einem Ölsumpf zu zwei Verbrauchern aufweisen und dass die erste Druckstufe zwei relativ zueinander bewegliche Bauteile hat und der zuschaltbare Elektroantrieb mit dem einem der relativ zueinander beweglichen Bauteile und der Direktantrieb mit dem anderem der Bauteile verbunden ist.

Durch diese Gestaltung lassen sich die Druckstufen für unterschiedliche Förderdrücke und Fördervolumen auslegen. Durch den mechanischen Direktantrieb lässt sich eine für den Normalbetrieb der Brennkraftmaschine oder der Ölpumpe vorgesehene Ölförderung sicherstellen. Der zuschaltbare Elektroantrieb ermöglicht die Deckung einer Spitzenlast an Ölbedarf hinsichtlich Förderdruck und Fördervolumen. Die Fördereinrichtung ist zudem im Vergleich zu dem Einsatz zweier getrennter Ölpumpen besonders einfach aufgebaut. Eine Unterstützung der Förderleistung der ersten Druckstufe durch den zuschaltbaren Elektroantrieb lässt sich einfach erzeugen, weil die erste Druckstufe zwei relativ zueinander bewegliche Bauteile hat und der zuschaltbare Elektroantrieb mit dem einem der relativ zueinander beweglichen Bauteile und der Direktantrieb mit dem anderem der Bauteile verbunden ist.

Eine kontinuierliche Förderung von Öl lässt sich gemäß einer anderen vorteilhaften Weiterbildung der Erfindung einfach sicherstellen, wenn die zweite Druckstufe und eines der relativ zueinander beweglichen Bauteile der ersten Druckstufe kontinuierlich mit dem Direktantrieb verbunden sind. Durch diese Gestaltung werden über den Direktantrieb beide Druckstufen kontinuierlich angetrieben. Dies ermöglicht die kontinuierliche Versorgung zweier getrennter Verbraucher mit unterschiedlichen Förderdrücken. Der zuschaltbare Elektroantrieb ermöglicht die Steigerung der Förderleistung der ersten Druckstufe, wenn einer der Verbraucher einen erhöhten Bedarf an Fördervolumen aufweist.

Die Fördereinrichtung weist gemäß einer anderen vorteilhaften Weiterbildung der Erfindung einen besonders geringen Energieverbrauch auf, wenn die zweite Druckstufe und eines der relativ zueinander beweglichen Bauteile der ersten Druckstufe kontinuierlich mit dem zuschaltbaren Elektroantrieb verbunden sind. In diesem Fall fördert ausschließlich die erste Druckstufe, angetrieben durch den Direktantrieb, einen von der Drehzahl der Brennkraftmaschine abhängiges Fördervolumen bei einem von der ersten Druckstufe festgelegten Förderdruck. Diese Förderung kann einem Verbraucher im Kraftfahrzeug für den Dauerbetrieb zugeführt werden. Wird ein erhöhter Druck und/oder ein erhöhter Volumenstrom benötigt, wird der Elektroantrieb zugeschaltet und treibt sowohl die zweite Druckstufe als auch zusätzlich zu dem Direktantrieb die erste Druckstufe an. Damit werden der zweite Förderdruck und das erhöhte Fördervolumen durch die Zuschaltung des Elektroantriebs erreicht.

Die Fördereinrichtung gestaltet sich gemäß einer anderen vorteilhaften Weiterbildung der Erfindung konstruktiv besonders einfach, wenn die erste Druckstufe eine Flügelzellenpumpe mit einem Rotor und mit einem relativ zum Rotor beweglichen Läuferteil ist und wenn der Direktantrieb mit dem Rotor oder dem Läuferteil und der Elektroantrieb mit dem jeweils anderen Bauteil des Läuferteils oder des Rotors verbunden ist. Vorzugsweise sind im Rotor verschieblich angeordnete Flügel zwangsgeführt und damit ständig gegen das Läuferteil vorgespannt. Vorzugsweise ist die Flügelzellenpumpe zudem doppelhubig ausgebildet, was einen besonders kleinen Bauraum bei einem vorgesehenen Fördervolumen zur Folge hat.

Für die Erzeugung der vorgesehenen Förderdrücke und Fördervolumen sind die einzelnen Pumpstufen vorzugsweise als unterschiedliche Pumpentypen ausgebildet. Ein schneller Beginn der Förderung des Öls beim Start der Brennkraftmaschine lässt sich gemäß einer anderen vorteilhaften Weiterbildung der Erfindung einfach sicherstellen, wenn die zweite Druckstufe eine Flügelzellenpumpe, Innenzahnradpumpe oder Außenzahnradpumpe ist.

Die Fördereinrichtung erfordert gemäß einer anderen vorteilhaften Weiterbildung der Erfindung besonders wenige zu montierende Bauteile, wenn die erste Druckstufe und die zweite Druckstufe in einem gemeinsamen Gehäuse angeordnet sind. Weiterhin gestaltet sich die Fördereinrichtung hierdurch besonders kompakt.

Zur weiteren Verringerung der Abmessungen der Fördereinrichtung trägt es gemäß einer anderen vorteilhaften Weiterbildung der Erfindung bei, wenn eine Antriebswelle des Elektroantriebs zumindest teilweise als Hohlwelle ausgebildet ist und konzentrisch zu einer Welle des Direktantriebs angeordnet ist. Ein weiterer Vorteil dieser Gestaltung besteht darin, dass die Hohlwelle mit einem kleinen Außendurchmesser versehen werden kann, was die Abdichtung der Hohlwelle gegenüber dem Gehäuse deutlich vereinfacht.

Eine ständige Bestromung des zuschaltbaren Elektroantriebs lässt sich gemäß einer anderen vorteilhaften Weiterbildung der Erfindung einfach vermeiden, wenn der zuschaltbare Elektroantrieb einen Freilauf oder eine schaltbare Bremse zur Abstützung des von dem Direktantrieb erzeugten Moments hat.

Die Förderleistung der ersten Druckstufe der Ölpumpe lässt sich gemäß einer anderen vorteilhaften Weiterbildung der Erfindung in einem besonders weiten Bereich frei regeln, wenn die Steuereinrichtung einen Generatormodus für den zuschaltbaren Elektroantrieb zur Verringerung der Leistung der Ölpumpe hat. Durch diese Gestaltung ist der Elektroantrieb im Generatormodus zur Übertragung einer Bremslast in die Ölpumpe ausgebildet. Ist die Bremslast gering, wird der Direktantrieb über das erste der relativ zueinander beweglichen Bauteile das zweite, mit dem Elektroantrieb verbundene Bauteil mitdrehen, was zu einer Verringerung der Förderleistung der Ölpumpe führt. Ist die Bremslast hoch, wird das zweite, mit dem Elektroantrieb verbundene Bauteil weitgehend festgehalten und die Ölförderung ist entsprechend der Leistung des mechanischen Direktantriebs entsprechend hoch. Dank der Erfindung kann das mit dem zuschaltbaren Elektroantrieb verbundene zweite Bauteil der ersten Druckstufe entsprechend der Steuerung durch die Steuereinrichtung wahlweise in die eine oder die andere Richtung bewegt werden. Damit lässt sich der zuschaltbare Elektroantrieb bei hohen Drehzahlen des mechanischen Direktantriebs zur Verringerung der Leistung der ersten Druckstufe heranziehen.

Eine besonders vorteilhafte Verwendung der Fördereinrichtung in einem Kraftfahrzeug ergibt sich gemäß einer anderen vorteilhaften Weiterbildung der Erfindung, wenn die eine Druckstufe zur Erzeugung von 2 bis 3 bar und die andere Druckstufe zur Erzeugung von 5 bis 30 bar ausgebildet ist. Durch diese Gestaltung lässt sich die Fördereinrichtung in Getrieben zur Kühlung und Ansteuerung einer Kupplung oder Schaltklauen und in der Brennkraftmaschine zur Förderung von Schmieröl und zur Verstellung einer Nockenwelle einsetzen. Eine Kupplung erfordert beispielhaft zur Betätigung 30 bar bei 3 l/min und zur Kühlung 30 l/min bei 2 - 3 bar. Eine Brennkraftmaschine benötigt beispielhaft zur Verstellung einer Nockenwelle 5 bar bei relativ geringem Fördervolumen und zur Aufrechterhaltung eines Schmierölkreislaufs etwa 2 bar bei erhöhten Fördervolumen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch eine Brennkraftmaschine eines Kraftfahrzeuges mit einer Fördereinrichtung für Öl,
- Fig.2: schematisch eine Ölpumpe Fördereinrichtung aus Figur 1,
- Fig.3: schematisch eine Verschaltung der Fördereinrichtung mit der Brennkraftmaschine und einem zuschaltbaren Elektroantrieb,
- Fig.4: schematisch eine weitere Ausführungsform der Verschaltung der Fördereinrichtung.

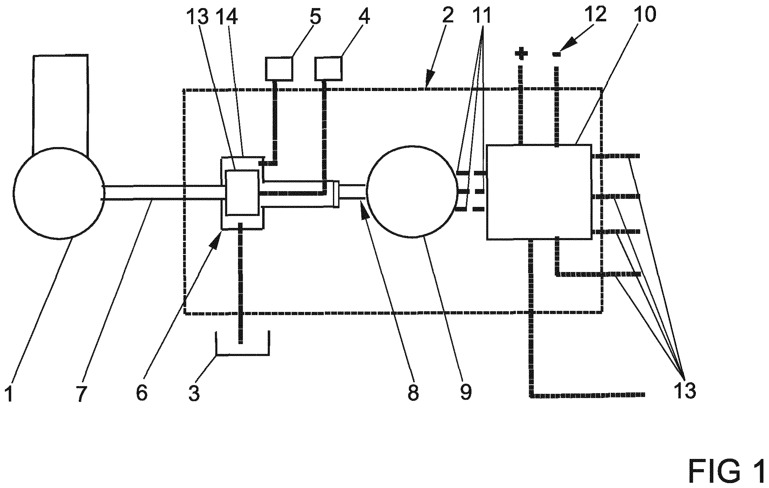

Figur 1 zeigt schematisch eine Brennkraftmaschine 1 eines Kraftfahrzeuges mit einer Fördereinrichtung 2 zur Förderung von Öl von einem Ölsumpf 3 zu zwei Verbrauchern 4, 5. Bei den Verbrauchern 4, 5 kann es sich um einen Schmierölkreislauf mit einer Nockenwellenverstellung der Brennkraftmaschine 1 oder um ein hydraulisch schaltbares und mittels des Öls kühlbares Getriebe oder eine schaltbare und kühlbare Kupplung handeln. Bei solchen Verbrauchern 4, 5 wird ein hoher Öldruck bei einem geringen Fördervolumen zum Schalten oder Betätigen und ein geringer Öldruck bei hohen Fördervolumen für eine Schmierung oder Kühlung benötigt. Die Fördereinrichtung 2 hat eine Ölpumpe 6 mit einem Direktantrieb 7 über die Brennkraftmaschine 1 und einen zuschaltbaren Elektroantrieb 8. Ein Elektromotor 9 des zuschaltbaren Elektroantriebs 8 ist mit einer elektronischen Steuereinrichtung 10 verbunden, welche den Elektroantrieb 8 in Abhängigkeit von Eingangssignalen wie einer Motordrehzahl, dem angeforderten Motormoment, der Öltemperatur und einem Solldruck über Steuerleitungen 11 ansteuert und mit elektrischem Strom eines Bordnetzes 12 des Kraftfahrzeuges versorgt. Für die Versorgung mit den Eingangssignalen ist die Steuereinrichtung 9 mit Signalleitungen 13 verbunden.

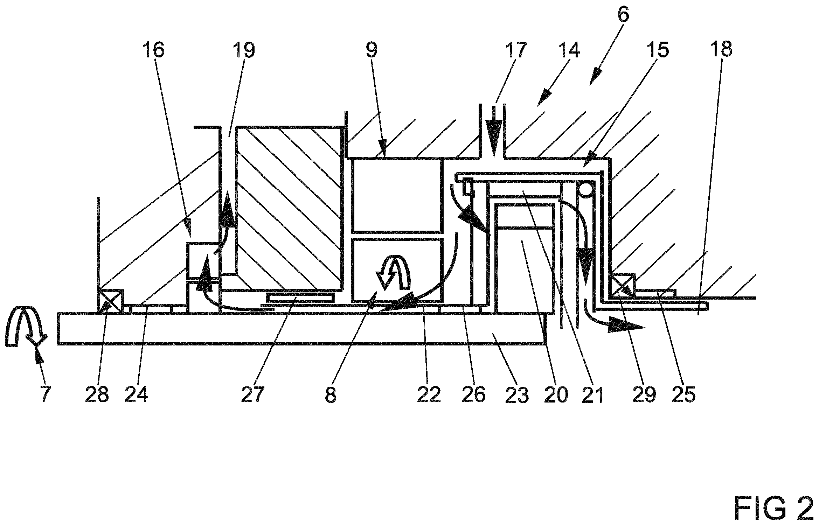

Figur 2 zeigt schematisch die Ölpumpe 6 der Fördereinrichtung 2 aus Figur 1. Die Ölpumpe 6 hat ein gemeinsames Gehäuse 14 für zwei Druckstufen 15, 16. Die Druckstufen 15, 16 sind mit einem gemeinsamen Ansauganschluss 17 verbunden und haben jeweils einen Ausgangsanschluss 18, 19. Der Ansauganschluss 17 ist mit dem Ölsumpf 3 verbunden. Die Ausgangsanschlüsse 18, 19 führen jeweils zu den in Figur 1 dargestellten Verbrauchern 4, 5. Eine erste Druckstufe 15 hat einen Rotor 20 und einem den Rotor 20 umschließendes Läuferteil 21 einer Flügelzellenpumpe. Damit hat die Ölpumpe 6 zwei relativ zueinander bewegliche Bauteile zur Förderung des Öls, von denen eines mit dem Direktantrieb 7 und das andere mit dem zuschaltbaren Elektroantrieb 8 verbunden ist. Die zweite Druckstufe 16 ist als Verdrängerpumpe ausgebildet und ausschließlich mit dem Direktantrieb 7 verbunden. Damit fördert die zweite Druckstufe 16 Öl in Abhängigkeit von der Drehzahl des Direktantriebs 7 und damit der Brennkraftmaschine 1. Die erste Druckstufe 15 fördert auch Öl in Abhängigkeit von der Drehzahl des Direktantriebs 7. Bei steigendem Bedarf wird der Elektroantrieb 8 zugeschaltet und ermöglicht eine Steigerung der Förderung an Öl. Der Förderdruck und das Fördervolumen der ersten Druckstufe 15 lässt sich damit durch die Zuschaltung des Elektroantriebs 8 steigern.

Der Elektromotor 9 des zuschaltbaren Elektroantriebs 8 treibt eine Hohlwelle 22 an. Die Hohlwelle 22 umschließt eine Welle 23 des Direktantriebs 7. Lagerstellen 24 - 26 lagern die Hohlwelle 22 und die Welle 23 an den Enden des Gehäuses 14 und untereinander. Weiterhin sind Dichtringe 28, 29 vorgesehen, die die Welle 23 und die Hohlwelle 22 gegenüber dem Gehäuse 14 abdichten. Damit gelangt über den zentralen Ansauganschluss 17 das Öl zu den beiden Druckstufen 15, 16 und anschließend zu den beiden Ausgangsanschlüssen 18, 19. Zur Verdeutlichung sind die Strömungen des Öls mit Pfeilen gekennzeichnet.

Der Elektroantrieb 8 hat einen Freilauf 27 zur Abstützung des von dem Direktantrieb 7 über die erste Druckstufe 15 übertragenen Drehmoments im stromlosen Zustand des Elektromotors 9. Anstelle des Freilaufs 27 kann auch eine schaltbare Bremse zur Abstützung des von dem Direktantrieb übertragenen Drehmoments eingesetzt sein.

Der Freilauf 27 oder die schaltbare Bremse kann in einer anderen Ausführungsform auch entfallen, wenn der Elektromotor 9 durch eine entsprechende Bestromung zur Abstützung des Drehmoments des Direktantriebs 7 geschaltet ist. Weiterhin kann die Figur 1 dargestellte Steuereinrichtung 10 einen Generatormodus für den zuschaltbaren Elektroantrieb 8 zur Verringerung der von dem Direktantrieb 7 erzeugten Leistung der Ölpumpe 6 aufweisen. Damit lässt sich das von dem Direktantrieb 7 eingeleitete Motormoment ganz oder nur teilweise abstützen.

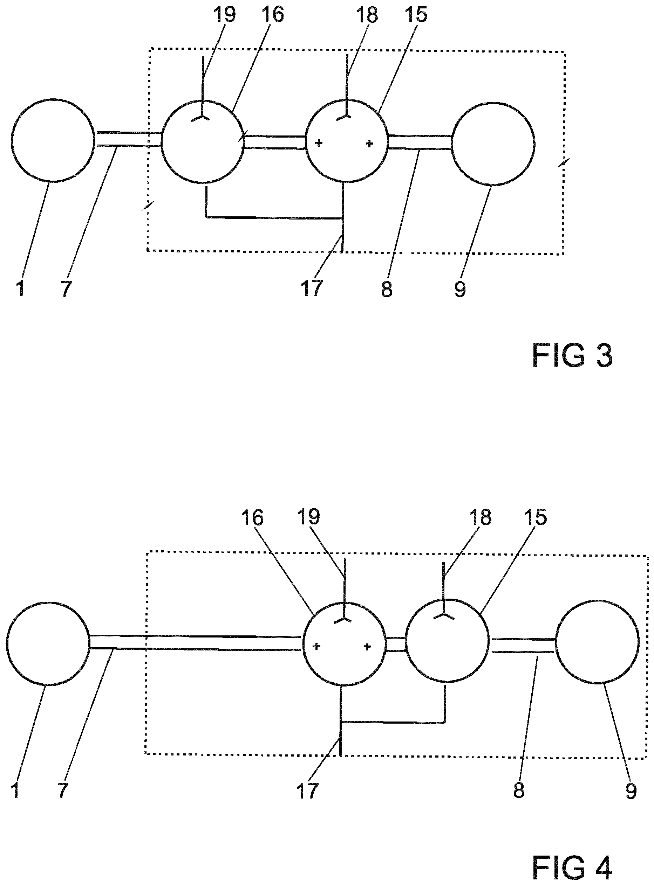

Figur 3 zeigt schematisch die Verschaltung der beiden Druckstufen 15, 16 und der Anschlüsse der Ölpumpe 6 aus Figur 2. Mit den Zeichen "+" in der ersten Druckstufe 15 ist verdeutlicht, dass sich die Antriebsleistungen des Direktantriebs 7 und des zuschaltbaren Elektroantriebs 8 addieren. Die zweite Druckstufe 16 ist konstant mit dem Direktantrieb 7 verbunden und fördert daher während des Betriebes der Brennkraftmaschine 1 kontinuierlich Öl.

Figur 4 zeigt eine weitere Ausführungsform einer Verschaltung der Druckstufen 15, 16, welche sich von der aus Figur 3 dadurch unterscheidet, dass die zweite Druckstufe 16 ausschließlich von dem Elektroantrieb 8 antreibbar ist. Bei stillstehenden Elektroantrieb 8 unterbleibt damit die Förderung von Öl über die zweite Druckstufe 16. Die erste Druckstufe 15 ist wie bei der Verschaltung nach Figur 3 sowohl von dem Direktantrieb 7 als auch von dem Elektroantrieb 8 antreibbar.

## Patentansprüche

1. Fördereinrichtung (2) zur Förderung von Öl aus einem Ölsumpf (3) zu einem Schmierölkreislauf einer Brennkraftmaschine (1) oder eines Getriebes eines Kraftfahrzeuges mit einer Ölpumpe (6), mit einem mechanischen Direktantrieb (7) und mit einem zuschaltbaren Elektroantrieb (8) zum Antrieb der Ölpumpe (6), **dadurch gekennzeichnet, dass** die Ölpumpe (6) eine erste Druckstufe (15) und eine zweite Druckstufe (16) hat, dass die Druckstufen (15, 16) unterschiedliche Förderdrücke und Fördervolumen aufweisen und dass die beiden Druckstufen (15, 16) einen gemeinsamen Ansauganschluss (17) und getrennte Ausgangsanschlüsse (18, 19) zur Förderung von Öl von einem Ölsumpf (3) zu zwei Verbrauchern (4, 5) aufweisen und dass die erste Druckstufe (15) zwei relativ zueinander bewegliche Bauteile hat und der zuschaltbare Elektroantrieb (8) mit dem einem der relativ zueinander beweglichen Bauteile und der Direktantrieb (7) mit dem anderem der Bauteile verbunden ist.

2. Fördereinrichtung nach Anspruch 1, **dadurch gekennzeichnet, dass** die zweite Druckstufe (16) und eines der relativ zueinander beweglichen Bauteile der ersten Druckstufe (15) kontinuierlich mit dem Direktantrieb (7) verbunden sind.

3. Fördereinrichtung nach Anspruch 1, **dadurch gekennzeichnet, dass** die zweite Druckstufe (16) und eines der relativ zueinander beweglichen Bauteile der ersten Druckstufe (15) kontinuierlich mit dem zuschaltbaren Elektroantrieb (8) verbunden sind.

4. Fördereinrichtung nach einem der Ansprüche 1 bis 3, **dadurch gekennzeichnet, dass** die erste Druckstufe (15) eine Flügelzellenpumpe mit einem Rotor (20) und mit einem relativ zum Rotor (20) beweglichen Läuferteil (21) ist und dass der Direktantrieb (7) mit dem Rotor (20) oder dem Läuferteil (21) und der Elektroantrieb (8) mit dem jeweils anderen Bauteil des Läufers (21) oder des Rotors (20) verbunden ist.

5. Fördereinrichtung nach einem der Ansprüche 1 bis 4, **dadurch gekennzeichnet, dass** die zweite Druckstufe (16) eine Flügelzellenpumpe, Innenzahnradpumpe oder Außenzahnradpumpe ist.

6. Fördereinrichtung nach einem der Ansprüche 1 bis 5, **dadurch gekennzeichnet, dass** die erste Druckstufe (15) und die zweite Druckstufe (16) in einem gemeinsamen Gehäuse (14) angeordnet sind.

7. Fördereinrichtung nach einem der Ansprüche 1 bis 6, **dadurch gekennzeichnet, dass** eine Antriebswelle des Elektroantriebs (8) zumindest teilweise als Hohlwelle (22) ausgebildet ist und konzentrisch zu einer Welle (23) des Direktantriebs (7) angeordnet ist.

8. Fördereinrichtung nach einem der Ansprüche 1 bis 7, **dadurch gekennzeichnet, dass** der zuschaltbare Elektroantrieb (8) einen Freilauf (27) oder eine schaltbare Bremse zur Abstützung des von dem Direktantrieb (7) erzeugten Moments hat.

9. Fördereinrichtung nach einem der Ansprüche 1 bis 7, **dadurch gekennzeichnet, dass** die Steuereinrichtung (10) einen Generatormodus für den zuschaltbaren Elektroantrieb (8) zur Verringerung der Leistung der Ölpumpe (6) hat.

10. Fördereinrichtung nach einem der Ansprüche 1 bis 9, **dadurch gekennzeichnet, dass** die eine Druckstufe (15, 16) zur Erzeugung von 2 bis 3 bar und die andere Druckstufe (16, 15) zur Erzeugung von 5 bis 30 bar ausgebildet ist.

## Claims

1. Delivery device (2) for delivering oil from an oil sump (3) to a lubricating oil circuit of a combustion engine (1) or a transmission of a motor vehicle, having an oil pump (6), a mechanical direct drive (7) and an activatable electric drive (8) for driving the oil pump (6), **characterized in that** the oil pump (6) has a first pressure stage (15) and a second pressure stage (16), **in that** the pressure stages (15, 16) have different delivery pressures and delivery volumes and **in that** the two pressure stages (15, 16) have a common suction connection (17) and separate outlet connections (18, 19) for delivering oil from an oil sump (3) to two consumers (4, 5) and **in that** the first pressure stage (15) has two components that can be moved relative to one another and the activatable electric drive (8) is connected to one of the components that can be moved relative to one another and the direct drive (7) is connected to the other of the components.

2. Delivery device according to Claim 1, **characterized in that** the second pressure stage (16) and one of the components of the first pressure stage (15) that can be moved relative to one another are connected continuously to the direct drive (7).

3. Delivery device according to Claim 1, **characterized in that** the second pressure stage (16) and one of the components of the first pressure stage (15) that can be moved relative to one another are connected continuously to the activatable electric drive (8).

4. Delivery device according to any one of Claims 1 to 3, **characterized in that** the first pressure stage (15) is a vane pump having a rotor (20) and a runner part (21), which can be moved relative to the rotor (20), and **in that** the direct drive (7) is connected to the rotor (20) or the runner part (21), and the electric drive (8) is connected to the other component of the runner (21) or of the rotor (20) in each case.

5. Delivery device according to any one of Claims 1 to 4, **characterized in that** the second pressure stage (16) is a vane pump, an internal gear pump or an external gear pump.

6. Delivery device according to any one of Claims 1 to 5, **characterized in that** the first pressure stage (15) and the second pressure stage (16) are arranged in a common housing (14).

7. Delivery device according to any one of Claims 1 to 6, **characterized in that** a drive shaft of the electric drive (8) is designed at least in part as a hollow shaft (22) and is arranged concentrically with a shaft (23) of the direct drive (7).

8. Delivery device according to any one of Claims 1 to 7, **characterized in that** the activatable electric drive (8) has a freewheel (27) or a selectable brake for supporting the torque generated by the direct drive (7).

9. Delivery device according to any one of Claims 1 to 7, **characterized in that** the control device (10) has a generator mode for the activatable electric drive (8) for the purpose of reducing the power of the oil pump (6).

10. Delivery device according to any one of Claims 1 to 9, **characterized in that** the one pressure stage (15, 16) is designed to generate 2 to 3 bar and the other pressure stage (16, 15) is designed to generate 5 to 30 bar.

## Revendications

1. Dispositif de refoulement (2) pour le refoulement d'huile d'un carter d'huile (3) vers un circuit d'huile de lubrification d'un moteur à combustion interne (1) ou d'une transmission d'un véhicule automobile avec une pompe à huile (6), avec un entraînement direct mécanique (7) et avec un entraînement électrique connectable (8) pour l'entraînement de la pompe à huile (6), **caractérisé en ce que** la pompe à huile (6) a un premier étage de pression (15) et un deuxième étage de pression (16), **en ce que** les étages de pression (15, 16) présentent des pressions de refoulement et des volumes de refoulement différents et **en ce que** les deux étages de pression (15, 16) présentent un raccord d'aspiration commun (17) et des raccords de sortie séparés (18, 19) pour le refoulement d'huile d'un carter d'huile (3) vers deux consommateurs (4, 5) et **en ce que** le premier étage de pression (15) a deux composants mobiles l'un par rapport à l'autre et l'entraînement électrique connectable (8) est relié à l'un des composants mobiles l'un par rapport à l'autre et l'entraînement direct (7) à l'autre des composants.

2. Dispositif de refoulement selon la revendication 1, **caractérisé en ce que** le deuxième étage de pression (16) et l'un des composants mobiles l'un par rapport à l'autre du premier étage de pression (15) sont reliés en continu à l'entraînement direct (7).

3. Dispositif de refoulement selon la revendication 1, **caractérisé en ce que** le deuxième étage de pression (16) et l'un des composants mobiles l'un par rapport à l'autre du premier étage de pression (15) sont reliés en continu à l'entraînement électrique connectable (8).

4. Dispositif de refoulement selon l'une quelconque des revendications 1 à 3, **caractérisé en ce que** le premier étage de pression (15) est une pompe à palettes avec un rotor (20) et avec une partie d'induit (21) mobile par rapport au rotor (20), et **en ce que** l'entraînement direct (7) est relié au rotor (20) ou à la partie d'induit (21) et l'entraînement électrique (8) à l'autre composant respectif de l'induit (21) ou du rotor (20).

5. Dispositif de refoulement selon l'une quelconque des revendications 1 à 4, **caractérisé en ce que** le deuxième étage de pression (16) est une pompe à palettes, une pompe à engrenages internes ou une pompe à engrenages externes.

6. Dispositif de refoulement selon l'une quelconque des revendications 1 à 5, **caractérisé en ce que** le premier étage de pression (15) et le deuxième étage de pression (16) sont agencés dans un boîtier commun (14).

7. Dispositif de refoulement selon l'une quelconque des revendications 1 à 6, **caractérisé en ce qu'**un arbre d'entraînement de l'entraînement électrique (8) est réalisé au moins partiellement sous forme d'arbre creux (22) et est agencé de manière concentrique par rapport à un arbre (23) de l'entraînement direct (7).

8. Dispositif de refoulement selon l'une quelconque des revendications 1 à 7, **caractérisé en ce que** l'entraînement électrique connectable (8) a une roue libre (27) ou un frein commutable pour le soutien du couple généré par l'entraînement direct (7).

9. Dispositif de refoulement selon l'une quelconque des revendications 1 à 7, **caractérisé en ce que** le dispositif de commande (10) a un mode générateur pour l'entraînement électrique connectable (8) afin de réduire la puissance de la pompe à huile (6).

10. Dispositif de refoulement selon l'une quelconque des revendications 1 à 9, **caractérisé en ce que** l'un des étages de pression (15, 16) est configuré pour produire 2 à 3 bars et l'autre étage de pression (16, 15) pour produire 5 à 30 bars.
